# EUROPEAN PATENT APPLICATION

(11) **EP 2 941 057 A1**
(43) Date of publication of application: **04.11.2015**
(21) Application number: 13869358.5
(22) Date of filing: 31.12.2013
(51) Int. Cl.: H04W 48/16

(54) **DEVICE DISCOVERY METHOD, APPARATUS AND SYSTEM**

(30) Priority: 31.12.2012 CN 201210593557
(71) Applicant: Huawei Device Co., Ltd., Shenzhen, Guangdong 518129 (CN)
(72) Inventor: GUAN, Xin, Shenzhen Guangdong 518129 (CN); DU, Zhenguo, Shenzhen Guangdong 518129 (CN); FANG, Ping, Shenzhen Guangdong 518129 (CN); DING, Zhiming, Shenzhen Guangdong 518129 (CN)
(74) Representative: Goddar, Heinz J.
(86) International application number: PCT/CN2013/091174
(87) International publication number: WO 2014/101893

(57) **Abstract**

Embodiments of the present invention provide a device discovery method, apparatus and system. The method includes: transmitting a detection request message on a set transmit channel, where the detection request message carries interception rule information of a local device, and the interception rule information includes at least interception time information and/or interception channel information; and intercepting, according to the interception rule information, a detection response message transmitted by another device. The device discovery method, apparatus and system provided by the embodiments of the present invention can improve the device discovery efficiency.

## Description

This application claims priority to Chinese Patent Application No. 201210593557.1, filed with the Chinese Patent Office on December 31, 2012, which is incorporated herein by reference in its entirety.

### TECHNICAL FIELD

Embodiments of the present invention relate to Internet technologies, and in particular, to a device discovery method, apparatus and system.

### BACKGROUND

With wide application of wireless fidelity (Wireless Fidelity, WiFi for short) technologies in various industries, access points (Access Point, AP for short) of a WiFi network are spread in sites such as hotels, cafes, and school stores. In recent years, various social WiFi (Social WiFi) application programs and products have been developed based on WiFi, where an important application is peer to peer (Peer to Peer, P2P for short) device discovery.

P2P device discovery has various application scenarios, but user requirements on the P2P device discovery in these scenarios are different. For example, scenario 1: if a user wants to find a game player, a user requirement in this scenario is that a terminal discovers a target device as quickly as possible after enabling a P2P device discovery function, and disables the P2P device discovery function after the discovery; and scenario 2: if a user subscribes to a service, a user requirement in this scenario is that a P2P device discovery function runs for a long time, and the user is prompted when the service appears.

In the prior art, P2P device discovery uses a manner of performing active scanning (Search) and passive scanning (listen) alternately to transmit a detection request message on each of three channels; specifically, after transmitting a detection request message on a channel, waits on the channel for a period of time to receive a detection response message, where waiting duration has a group of preset values, and duration of each wait is selected randomly from the group of values; and after the wait ends, switches to a next channel to transmit the detection request message. The execution is repeated in this way.

However, this P2P device discovery method is low in efficiency, and consumes a lot of power. Especially in the foregoing scenario 2, if a user needs to use a P2P device discovery function for a long time, power of a terminal runs out quickly, which does not facilitate the use of the user.

### SUMMARY

Embodiments of the present invention provide a device discovery method, apparatus and system, so as to improve the device discovery efficiency.

According to a first aspect, an embodiment of the present invention provides a device discovery method, including: transmitting a detection request message on a set transmit channel, where the detection request message carries interception rule information of a local device, and the interception rule information includes at least interception time information and/or interception channel information; and intercepting, according to the interception rule information, a message transmitted by another device.

In a first possible implementation manner of the first aspect, the transmitting a detection request message on a set transmit channel includes: transmitting the detection request message on one set channel, or transmitting the detection request message on at least two set channels sequentially.

According to the first possible implementation manner of the first aspect, in a second possible implementation manner, the intercepting, according to the interception rule information, a message transmitted by another device includes: according to the interception rule information, intercepting, on the one channel, a message transmitted by another device, or intercepting, sequentially on the at least two set channels, a message transmitted by another device.

According to the first aspect, or the first or second possible implementation manner of the first aspect, in a third possible implementation manner of the first aspect, the interception time information in the interception rule information includes: an interval from a current moment to a start moment of next interception, interception duration, and/or a time interval between two adjacent interceptions.

According to the first aspect, or any one of the first to third possible implementation manners of the first aspect, in a fourth possible implementation manner of the first aspect, the intercepting, according to the interception rule information, a message transmitted by another device includes: intercepting, according to the interception rule information, a detection response message and/or a detection request message transmitted by another device.

According to the third possible implementation manner of the first aspect, in a fifth possible implementation manner, an interval between two adjacent transmissions of the detection request message is first duration, the interception duration in the interception rule information is second duration, and the first duration is less than the second duration.

According to the first aspect, or any one of the first to fifth possible implementation manners of the first aspect, in a sixth possible implementation manner of the first aspect, the method further includes: entering a sleep time according to the interception rule information.

According to the sixth possible implementation manner of the first aspect, in a seventh possible implementation manner, the method further includes: according to the interception rule information, in the sleep time, waking up the local device in at least one set interception window time, and intercepting the message transmitted by another device.

According to a second aspect, an embodiment of the present invention provides a device discovery method, including: receiving a detection request message transmitted by another device, where the detection request message carries interception rule information, and the interception rule information includes interception time information and/or interception channel information; and transmitting a detection response message in the interception time and/or on an interception channel according to the interception rule information carried in the detection request message.

According to a third aspect, an embodiment of the present invention provides a device discovery transmission apparatus, including: a detecting module, configured to transmit a detection request message on a set transmit channel, where the detection request message carries interception rule information of a local device, and the interception rule information includes at least interception time information and/or interception channel information; and an interception module, configured to intercept, according to the interception rule information, a message transmitted by another device.

In a first possible implementation manner of the third aspect, the detecting module is specifically configured to transmit the detection request message on one set channel, or transmit the detection request message on at least two set channels sequentially.

According to the first possible implementation manner of the third aspect, in a second possible implementation manner, the interception module is specifically configured to: according to the interception rule information, intercept, on the one channel, a message transmitted by another device, or intercept, sequentially on the at least two set channels, a message transmitted by another device.

According to the third aspect, or the first or second possible implementation manner of the third aspect, in a third possible implementation manner of the third aspect, the interception time information in the interception rule information includes: an interval from a current moment to a start moment of next interception, interception duration, and/or a time interval between two adjacent interceptions.

According to the third aspect, or any one of the first to third possible implementation manners of the third aspect, in a fourth possible implementation manner of the third aspect, the interception module is specifically configured to intercept, according to the interception rule information, a detection response message and/or a detection request message transmitted by another device.

According to the third possible implementation manner of the third aspect, in a fifth possible implementation manner, an interval between two adjacent transmissions of the detection request message is first duration, the interception duration in the interception rule information is second duration, and the first duration is less than the second duration.

According to the third aspect, or any one of the first to fifth possible implementation manners of the third aspect, in a sixth possible implementation manner of the first aspect, the apparatus further includes: a sleep module, configured to enter a sleep time according to the interception rule information.

According to the sixth possible implementation manner of the third aspect, in a seventh possible implementation manner, the apparatus further includes: an interception window module, configured to: according to the interception rule information, in the sleep time, wake up the local device in at least one set interception window time, and intercept the message transmitted by another device

According to a fourth aspect, an embodiment of the present invention provides a second device discovery apparatus, including: a receiving module, configured to receive a detection request message transmitted by another device, where the detection request message carries interception rule information, and the interception rule information includes interception time information and/or interception channel information; and a response module, configured to transmit a detection response message in the interception time and/or on an interception channel.

According to a fifth aspect, an embodiment of the present invention provides a device discovery system, including: at least one first device discovery apparatus according to any one of the possible implementation manners in the third aspect and at least one second device discovery apparatus in the fourth aspect.

In the device discovery method, apparatus and system provided by the embodiments of the present invention, when a detection request message is transmitted, the detection request message carries interception rule information that is used by a local device to receive a detection response message, so that after receiving the detection request message, a target device can transmit the detection response message in an effective time and on an effective channel according to the interception rule information, thereby improving the device discovery efficiency.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of Embodiment 1 of a device discovery method according to the present invention;
FIG. 2 is a flowchart of Embodiment 2 of a device discovery method according to the present invention;
FIG. 3 is a signaling flowchart of Embodiment 3 of a device discovery method according to the present invention;
FIG. 4 is a signaling flowchart of Embodiment 4 of a device discovery method according to the present invention;
FIG. 5 is a signaling flowchart of Embodiment 5 of a device discovery method according to the present invention;
FIG. 6 is a schematic structural diagram of Embodiment 1 of a first device discovery apparatus according to the present invention;
FIG. 7 is a schematic structural diagram of Embodiment 2 of a first device discovery apparatus according to the present invention;
FIG. 8 is a schematic structural diagram of Embodiment 1 of a second device discovery apparatus according to the present invention;
FIG. 9 is a schematic structural diagram of Embodiment 3 of a first device discovery apparatus according to the present invention; and
FIG. 10 is a schematic structural diagram of Embodiment 2 of a second device discovery apparatus according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

A device involved in each embodiment of the present invention may be a P2P device, and specifically, may be any device that has a wireless fidelity (Wireless Fidelity, WiFi for short) function and that can bear a P2P application program. A specific form may be a mobile phone, a notebook computer, a tablet computer, a personal digital assistant (Personal Digital Assistant, PDA for short), or the like. Because a device discovery method relates to interaction between at least two P2P devices, to facilitate description, in each embodiment of the present invention, a first device is used to represent a party that actively detects another device, and a second device is used to represent a target device to be discovered.

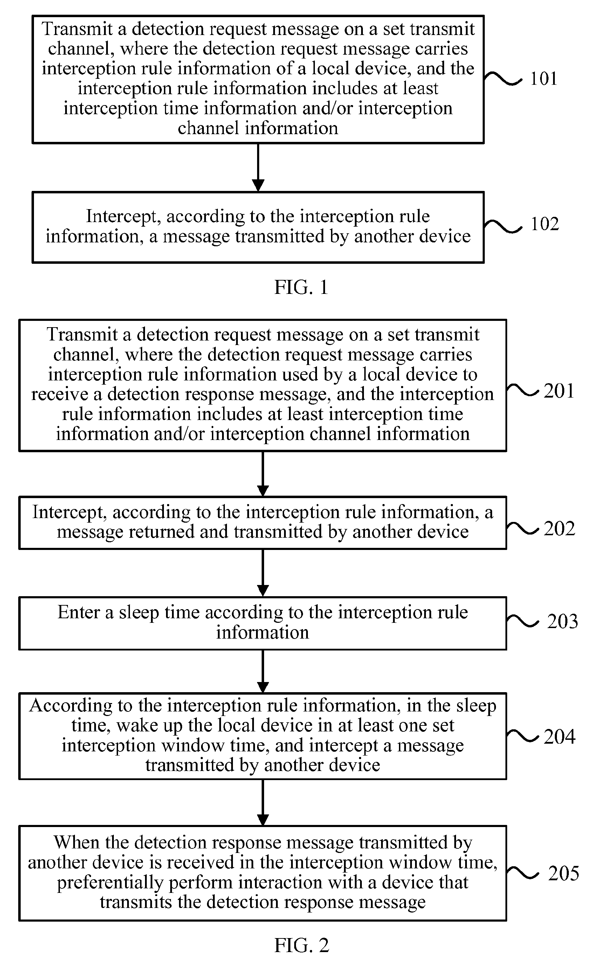

FIG. 1 is a flowchart of Embodiment 1 of a device discovery method according to the present invention, and this embodiment is executed by a first device. The method may be implemented by any P2P device. As shown in FIG. 1, the method of this embodiment may include:

Step 101: Transmit a detection request message on a set transmit channel, where the detection request message carries interception rule information of a local device, and the interception rule information includes at least interception time information and/or interception channel information.

At present, there are three channels for social WiFi (Social WiFi) to use, which separately are channel 1, channel 6, and channel 11. A P2P device may transmit a message or intercept a message from another P2P device on the three channels. In the prior art, a detection request message is transmitted on one channel, and interception is performed on the channel for a period of time; and then the detection request message is transmitted on a next channel, and interception is performed on the channel for a period of time. In this way, the detection request message is transmitted and interception is performed on the three channels alternately.

In step 101, when the first device transmits the detection request message, the detection request message carries interception rule information that is used by the local device to receive a detection response message, so that a second device may give a response according to the interception rule information. In this way, an interception rule of the first device may be not limited, and may be set according to a specific scenario requirement that an application program of a P2P device needs to meet. For example, some application programs need to discover multiple target devices and need to run for a long time, and during the long period of time, the device needs to further provide a user with communications functions such as making a phone call and transmitting an SMS message. In this case, the interception rule may be set to a power saving solution, for example, an interception time may be set to be relatively short, while an interval between two adjacent interception time periods may be relatively long. Further, in the interval, the first device may be further set to a sleep state, to save power of the device.

In addition, the interception time refers to duration during which the first device is in a working state, and can receive a message transmitted by another device. Besides the interception time, the first device may be in a sleep state, or may be in a state of neither sleeping nor receiving a message, which is not limited in the present invention.

During specific implementation, besides carrying interception rule information of the local device, the detection request message may further carry transmission rule information of the local device, so that the second device that receives the detection request message may receive a subsequent message according to the transmission rule information.

Step 102: Intercept, according to the interception rule information, a message transmitted by another device.

Specifically, the message from another device, such as a detection response message transmitted by another device or a detection request message transmitted by another device, may be intercepted in set interception time and on a set channel. In the remaining time, the first device may enter a sleep state to reduce power consumption.

In this embodiment, when a detection request message is transmitted, the detection request message carries interception rule information that is used by a local device to receive a detection response message, so that after receiving the detection request message, a target device can transmit the detection response message in an effective time and on an effective channel according to the interception rule information, thereby improving the device discovery accuracy and efficiency.

During specific implementation, because at present, there are three channels for Social WiFi to use, the first device may transmit the detection request message on one set channel, or transmit the detection request message on two or three set channels sequentially.

Correspondingly, in step 102, according to the interception rule information, the first device may intercept, on the one channel, a detection response message transmitted by another device, or intercept, sequentially on the two or three set channels, a message transmitted by another device.

According to a resource balance principle, preferably, the first device may transmit a detection request message on one set channel, and sequentially maintain a continuous interception time period on each of the three channels, to intercept the message transmitted by another device; or transmit a detection request message on the three channels sequentially, and intercept, on one set channel, a message transmitted by another device.

Further, the interception time information in the interception rule information may include: an interval from a current moment to a start moment of next interception, interception duration, and/or a time interval between two adjacent interceptions. Specifically, the current moment may be a moment at which the detection request message is transmitted, and the interception duration may be a time length for which next interception lasts. An exemplary solution is that the interception rule information includes both the interval from the current moment to a start moment of next interception and the interception duration. However, because time for wireless transmission is quite short and is negligible, the second device that receives the detection request message may obtain, according to the receiving moment of the detection request message and the interval, a moment at which the first device starts next interception. In combination with duration of the next interception, the second device that receives the detection request message may transmit a detection response message accurately in a continuous time period of the last time the first device performs interception.

Further, in step 102 of the foregoing embodiment, the intercepting a message transmitted by another device may include: intercepting a detection response message and/or a detection request message transmitted by another device.

Further, in step 101 of the foregoing embodiment, the transmitting a detection request message on a set channel includes: transmitting the detection request message on the set transmit channel periodically and/or aperiodically.

Further, preferably, a period may be set for a process in which the first device intercepts a message transmitted by another device, to execute interception periodically; a process of transmitting a detection request message may be executed in a manner of transmitting the detection request message preset times in a time period; and a time interval between two adjacent transmissions the detection request message may be set to be randomly selected within a range, to avoid the devices from transmitting the detection request message synchronously in a same period. On this basis, the interval between two adjacent transmissions of the detection request message may be set to first duration, where the first duration changes randomly within a range, and interception duration is second duration. In addition, the first duration may be controlled to be less than the second duration, to ensure that the detection request message is transmitted at least twice in a continuous interception process limited by the interception duration, that is, there are two opportunities to receive the detection response message from another device, thereby improving the discovery accuracy.

FIG. 2 is a flowchart of Embodiment 2 of a device discovery method according to the present invention, and this embodiment is executed by a first device. As shown in FIG. 2, the method of this embodiment may include:

Step 201: Transmit a detection request message on a set transmit channel, where the detection request message carries interception rule information of a local device, and the interception rule information includes at least interception time information and/or interception channel information.

Step 202: Intercept, according to the interception rule information, a message transmitted by another device.

Step 203: Enter a sleep time according to the interception rule information.

Specifically, the first device may set a time range according to a requirement of each application program. In the time range, a time excluding the interception time is set as a sleep time, and in the sleep time, the first device still wakes up the local device and transmits the detection request message in a set time period according to a specified rule, and is in a sleep state in the remaining time, so that power consumption is extremely small. It should be noted that, the foregoing is just an exemplary solution, and how to specifically set the sleep is not limited in this embodiment of the present invention. For example, the sleep time may be set in an interception time interval, or some time periods during which the first device neither sleeps nor receives a message from another device may also be set.

Step 204: According to the interception rule information, in the sleep time, wake up the local device in at least one set interception window time, and intercept a message transmitted by another device.

Specifically, if the sleep time accounts for a large proportion of an entire time range, that is, the first device is in the sleep state most of the time and cannot receive the message transmitted by another device, the first device can save power, but extremely low discovery efficiency may be caused. In this case, some interception windows may be set in the sleep time to solve this contradiction. Correspondingly, information about the interception windows may also be carried in the detection request message in step 201, to inform another device.

Preferably, the interception window may be set as follows: each time after transmitting the detection request message, the first device immediately enters an interception window, so that another device immediately transmits a detection response message after receiving the detection request message transmitted by the first device. For this exemplary solution, because a period of the interception window is consistent with a period of transmitting the detection request message, and there is no interval between the period of the interception window and a transmission time of the detection request message, that is, an interception window of this type has a simple rule, and it is easy to agree on the rule, information about the interception window in this exemplary solution may be not carried in the detection request message.

It should be noted that, setting an interception window time to be in a sleep time is only an exemplary solution. During actual implementation, an interception window time may also be set in an activated state time, for example, when some time periods during which the first device neither sleeps nor receives a message from another device are set, an interception window time may be set in these time periods.

Step 205: When the detection response message transmitted by another device is received in the interception window time, preferentially perform interaction with a device that transmits the detection response message.

Duration of the interception window is generally set to be relatively short. If a message transmitted by another device is intercepted in the interception window, for example, when a detection response message transmitted by another device is intercepted, or a detection request message transmitted by another device is intercepted and a requirement of the another device is met, because the interception window time is insufficient for the local device to perform interaction with the another device, the interception window time may be prolonged in this case, so as to perform further information exchange, such as negotiation configuration, authentication, and connection, with the another device. During the information exchange, a subsequent message needs to be waited for, and during specific implementation, a preset time may be set. If no subsequent message is received in the preset time, the first device may re-enter the sleep time.

During actual implementation, the operation of step 205 is not just limited to waking up the local device from the sleep state when the message from another device is received in the interception window, but the first device may preferentially perform interaction with the another device at any stage when receiving the message from the another device. For example, when the first device receives the message from another device just at a time point at which the interception time is about to end, that is, at a time point at which the first device is about to enter a sleep state, or when the interception time is insufficient to complete information exchange with the another device, the length of the interception time may be prolonged until information exchange with the another device is completed. After completion, if it is further required to continuously discover more second devices, the process from step 201 to step 205 in the foregoing may be re-executed; otherwise, a discovery program may exit.

To verify the effect of the solution of this embodiment, in this embodiment of the present invention, simulation is performed between the solution of this embodiment and the solution of the prior art, to compare a time length required for discovery of another device. There are a total of two P2P devices during the simulation. A simulation process is not interfered by another device, and a mechanism such as withdrawal or retransmission is not used. Simulation parameters of the two P2P devices are as follows: duration of transmitting a detection request message is 0.4 milliseconds, a transmit power is 50 milliwatts, and an interception power is 25 milliwatts.

In the simulation process, the solution of the prior art is named as solution 1. An interception time of solution 1 is equal to a value randomly taken from 100 ms, 200 ms, and 300 ms, and an average interception period thereof is 200 ms. For two solutions separately used in this embodiment, one is solution 2: a detection request message is transmitted on one set channel, and a continuous interception time period is maintained on each of three channels sequentially, to intercept a detection response message transmitted by another device, and for fair comparison with solution 1, an interception period is also set to 200 ms; and the other is solution 3: a detection request message is transmitted on three channels sequentially, a detection response message transmitted by another device is intercepted on one set channel, and for fair comparison with solution 1, an interception period is also set to 200 ms.

A start time in the three solutions is set to any moment in a discovery process, and an end time is a time at which either of two P2P devices receives a detection response message. The number of running times of the simulation is 100000, and a time step is 200 ms. A simulation result shows that solution 2 is slightly superior to solution 1 in discovery time, but a discovery time of solution 3 is far less than that of solution 1. Specifically, in all 100000 times of running, a discovery completion probability of solution 3 in 200 ms is over 99%, while a discovery completion probability of solution 1 in 200 m is lower than 72%. An average discovery time of solution 3 is 45 ms, while an average discovery time of solution 1 is 160 ms. Therefore, obviously, the discovery efficiency of the solution of this embodiment (transmitting a detection request message on three channels sequentially, and intercepting, on one set channel, a detection response message transmitted by another device) is far higher than that of the discovery solution in the prior art.

In this embodiment, by adding a sleep time to a device discovery process, power consumption of a device discovery program is reduced; by adding an interception window to the sleep time and reasonably setting the interception window, the discovery efficiency is improved, and a time needed by a device for completing discovery is shortened; and by using a mechanism in which a local device can be woken up from a sleep state when a detection response message transmitted by another device is intercepted in an interception window time, information exchange with a target device can be performed in time, so that the entire discovery process is completed in a shortest time.

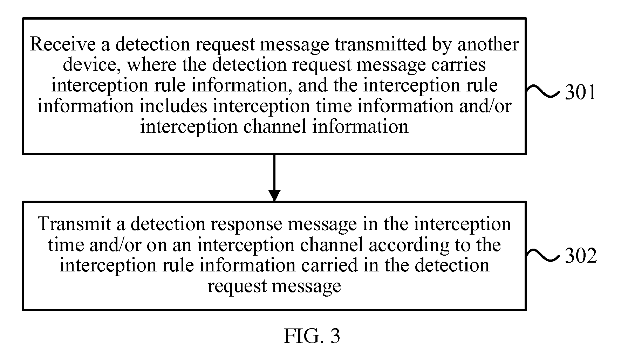

FIG. 3 is a flowchart of Embodiment 3 of a device discovery method according to the present invention, and this embodiment is executed by a second device. The method may be executed by any P2P device. As shown in FIG. 3, the method of this embodiment includes:

Step 301: Receive a detection request message transmitted by another device, where the detection request message carries interception rule information, and the interception rule information includes interception time information and/or interception channel information.

Specifically, because this embodiment is executed by a second device, that is, a target device to be discovered; the another device in step 301 may be corresponding to a first device, that is, a device that actively performs detection. The interception rule information carried in the detection request message is also interception rule information of the first device. The interception rule information may be the same as or may be different from the interception rule information of the second device.

Step 302: Transmit a detection response message in the interception time and/or on an interception channel according to the interception rule information carried in the detection request message.

Specifically, the second device transmits the detection response message according to an interception rule of the first device, for example, determines, according to the interception rule information carried in the received detection request message, a time for transmitting the detection response message and a transmit channel. In this way, it may be ensured that the first device receives the detection response message successfully.

The two devices may perform further information exchange subsequently until the two devices discover each other.

In this embodiment, a detection request message that carries interception rule information and is transmitted by another device is received, and a detection response message is transmitted to the device according to the interception rule information, so as to ensure that the transmitted detection response message is successfully received, thereby improving the device discovery efficiency.

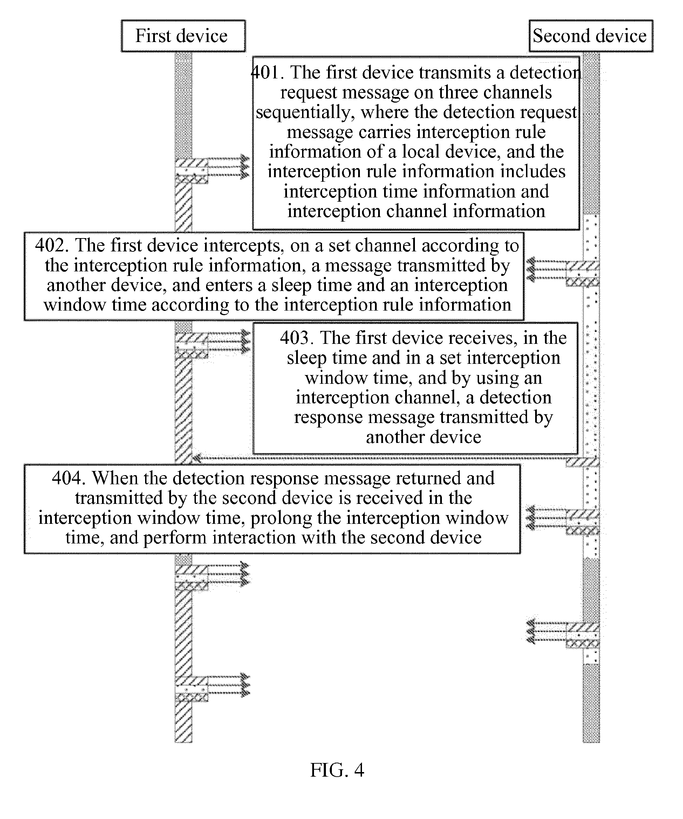

FIG. 4 is a signaling flowchart of Embodiment 4 of a device discovery method according to the present invention. In this embodiment, discovery methods used by two devices are consistent, and for brevity of description, this embodiment is described by using a first device as the principal. In the figure, a diagonal shadow, a spot shadow, and a cross line shadow are separately used to represent three different channels, and a gray filling is used to represent a sleep state; and in the figure, channels used by the two devices for performing interception may be the same or may be different. In addition, to make the figure clearer, short arrows are used in the figure to indicate that a detection request message is transmitted periodically. As shown in FIG. 4, the method of this embodiment may include:

Step 401: A first device transmits a detection request message on three channels sequentially, where the detection request message carries interception rule information of a local device, and the interception rule information includes interception time information and interception channel information.

Step 402: The first device intercepts, on a set channel according to the interception rule information, a message transmitted by another device, and enters a sleep time and an interception window time according to the interception rule information.

Step 403: The first device receives, in the sleep time and in a set interception window time, and by using an interception channel, a detection response message transmitted by another device.

Step 404: When the detection response message transmitted by a second device is received in the interception window time, prolong the interception window time, and perform interaction with the second device.

In this embodiment, by adding a sleep time to a device discovery process, power saving is implemented; and by using an interception window whose time may be prolonged, a discovery program is more effective.

To verify the effect of the solution of this embodiment in a power saving aspect, the solution of this embodiment is simulated, and multiple solution combinations in which sleep time lengths are different and interception time lengths are different are simulated, to observe a corresponding average power consumption condition under different average discovery times. A simulation result shows that, when it is selected that a continuous interception time is 400 ms, a sleep time is 2s, and no interception window is set, an average discovery time is 600 ms, and the average power consumption is 50 mw. In this case, compared with the discovery solution of the prior art, this embodiment saves power consumption of 80%.

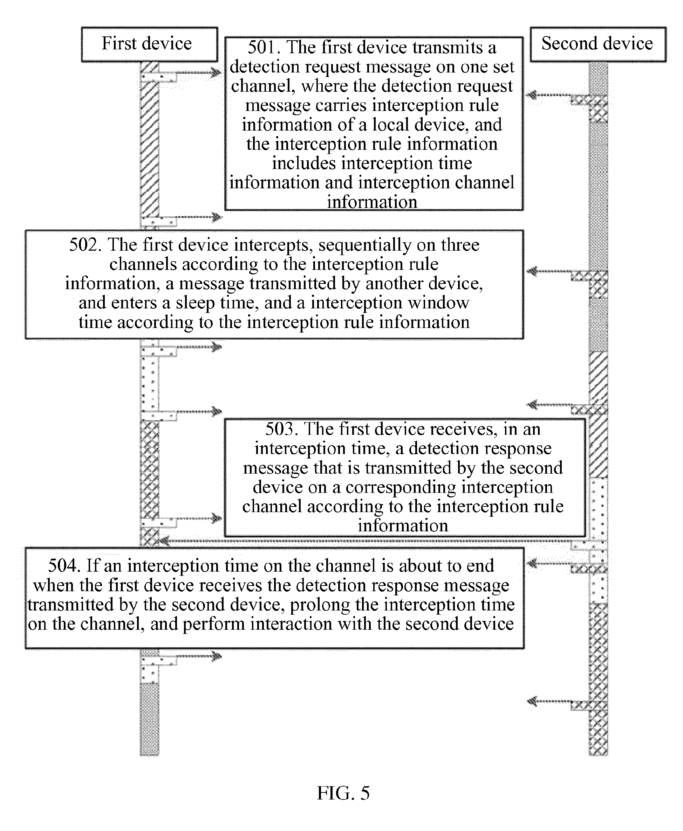

FIG. 5 is a signaling flowchart of Embodiment 5 of a device discovery method according to the present invention. In this embodiment, discovery methods used by two devices are consistent, and for brevity of description, this embodiment is described by using a first device as the principal. In the figure, a diagonal shadow, a spot shadow, and a cross line shadow are separately used to represent three different channels, and a gray filling is used to represent a sleep state; and in the figure, channels that are used by the two devices to transmit a detection request message may be the same or may be different. In addition, to make the figure clearer, short arrows are used in the figure to indicate that the detection request message is transmitted periodically. As shown in FIG. 5, the method of this embodiment may include:

Step 501: A first device transmits a detection request message on one set channel, where the detection request message carries interception rule information of a local device, and the interception rule information includes interception time information and interception channel information.

Step 502: The first device intercepts, sequentially on three channels according to the interception rule information, a message transmitted by another device, and enters a sleep time and an interception window time according to the interception rule information.

Step 503: The first device receives, in an interception time, a detection response message that is transmitted by a second device on a corresponding interception channel according to the interception rule information.

Step 504: If an interception time on the channel is about to end when the first device receives the detection response message transmitted by the second device, prolong the interception time on the channel, and perform interaction with the second device.

A scenario of step 504 may be that: when receiving the detection response message transmitted by the second device, the first device is about to enter a sleep state according to a set interception rule, or is about to change a channel for interception. In this case, because the detection response message transmitted by another device is received, interception time on the channel may be prolonged, so as to complete interaction with the second device.

When the detection response message transmitted by the second device is intercepted in the interception window time, the local device is woken up from the sleep state to perform interaction with the second device.

In this embodiment, by adding a sleep time to a device discovery process, power saving is implemented; and when a detection response message is received, an interception time may be prolonged on a channel, so that a discovery program is more effective.

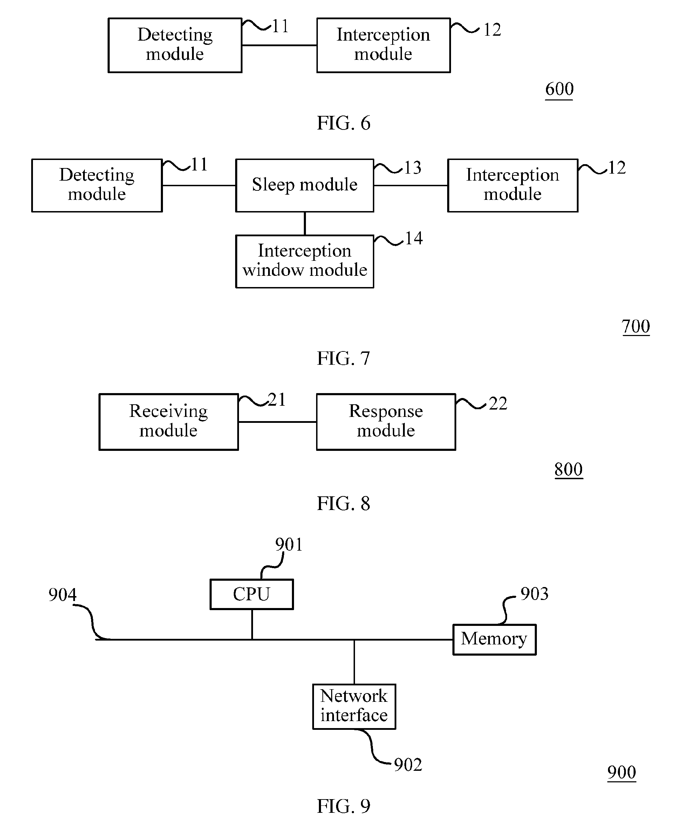

FIG. 6 is a schematic structural diagram of Embodiment 1 of a first device discovery apparatus according to the present invention. As shown in FIG. 6, an apparatus 600 of this embodiment may include: a detecting module 11 and an interception module 12, where the detecting module 11 is configured to transmit a detection request message on a set transmit channel, where the detection request message carries interception rule information of a local device and the interception rule information includes at least interception time information and/or interception channel information; and the interception module 12 is configured to intercept, according to the interception rule information, a detection response message transmitted by another device.

The apparatus of this embodiment can be configured to execute the technical solution of the method embodiment shown in FIG. 1, and has corresponding functional modules. An implementation principle of the apparatus is similar to that of the method, which is not described again herein. In the apparatus of this embodiment, when a detection request message is transmitted, the detection request message carries interception rule information that is used by a local device to receive a detection response message, so that after receiving the detection request message, a target device can transmit the detection response message in an effective time and on an effective channel according to the interception rule information, thereby improving the device discovery accuracy and efficiency.

In the apparatus of this embodiment, during specific implementation, preferably, the detecting module 11 is specifically configured to transmit the detection request message on one set channel, or transmit the detection request message on at least two set channels sequentially.

In the apparatus of this embodiment, during specific implementation, preferably, the interception module 12 is specifically configured to: according to the interception rule information, intercept, on the one channel, a message transmitted by another device, or intercept, sequentially on the at least two set channels, a message transmitted by another device.

In the apparatus of this embodiment, during specific implementation, preferably, the interception time information in the interception rule information includes: an interval from a current moment to a start moment of next interception, interception duration, and/or a time interval between two adjacent interceptions.

In the apparatus of this embodiment, during specific implementation, preferably, the interception module 12 is specifically configured to: intercept, according to the interception rule information, a detection response message and/or a detection request message transmitted by another device.

In the apparatus of this embodiment, during specific implementation, preferably, to improve the discovery accuracy, an interval between two adjacent transmissions of the detection request message is first duration, the interception duration in the interception rule information is second duration, and the first duration is less than the second duration.

FIG. 7 is a schematic structural diagram of Embodiment 2 of a first device discovery apparatus according to the present invention. As shown in FIG. 7, on the basis of a structure of an apparatus shown in FIG. 6, the apparatus 700 of this embodiment may further include: a sleep module 13 and an interception window module 14, where the sleep module 13 is configured to enter a sleep time according to the interception rule information; and the interception window module 14 is configured to: according to the interception rule information, in the sleep time, wake up the local device in at least one set interception window time, and intercept the message transmitted by another device.

The apparatus of this embodiment can be configured to execute the technical solution of the method embodiment shown in FIG. 2, and has corresponding functional modules. An implementation principle and a technical effect of the apparatus are similar to those of the method, which are not described again herein.

FIG. 8 is a schematic structural diagram of Embodiment 1 of a second device discovery apparatus according to the present invention. As shown in FIG. 8, the apparatus 800 of this embodiment includes: a receiving module 21 and a response module 22, where the receiving module 21 is configured to receive a detection request message transmitted by another device, where the detection request message carries interception rule information, and the interception rule information includes interception time information and/or interception channel information; and the response module 22 is configured to transmit a detection response message in the interception time and/or on an interception channel according to the interception rule information carried in the detection request message.

The apparatus of this embodiment can be configured to execute the technical solution of the method embodiment shown in FIG. 3, and has corresponding functional modules. An implementation principle of the apparatus is similar to that of the method, which is not described again herein. In the apparatus of this embodiment, a detection request message that carries interception rule information and is transmitted by another device is received, and a detection response message is transmitted to the device according to the interception rule information, so as to ensure that the transmitted detection response message is successfully received, thereby improving the device discovery efficiency.

FIG. 9 is a schematic structural diagram of Embodiment 3 of a first device discovery apparatus according to the present invention. As shown in FIG. 9, the first device discovery apparatus 900 of this embodiment includes: at least one CPU 901, at least one network interface 902, a memory 903, and at least one communications bus 904. The communications bus 904 is configured to implement connection and communication between components. The memory 903 may include a high speed RAM memory, or may include a non-volatile memory (non-volatile memory, NVM for short), for example, at least one magnetic disk memory. The memory 903 may optionally include at least one storage apparatus to store various types of code, and is configured to implement various basic services and process a task based on hardware.

The CUP 901 executes the following actions according to an indication of the code stored by the memory 903: transmitting a detection request message on a set transmit channel, where the detection request message carries interception rule information of the local device, and the interception rule information includes at least interception time information and/or interception channel information; and intercepting, according to the interception rule information, a detection response message transmitted by another device.

Further, the CPU 901 is further configured to transmit the detection request message on one set channel, or transmit the detection request message on at least two set channels sequentially; according to the interception rule information, intercept, on the one channel, a message transmitted by another device, or intercept, sequentially on at least two set channels, a message transmitted by another device, where interception time information in the interception rule information includes: an interval from a current moment to a start moment of next interception, interception duration, and/or a time interval between two adjacent interceptions; intercept, according to the interception rule information, a detection response message and/or a detection request message transmitted by another device, where an interval between two adjacent transmissions of the detection request message is first duration, the interception duration in the interception rule information is second duration, and the first duration is less than the second duration; enter a sleep time according to the interception rule information; and according to the interception rule information, in the sleep time, wake up the local device in at least one set interception window time, and intercept the message transmitted by another device.

The apparatus of this embodiment can be configured to execute the technical solution of the method embodiment shown in FIG. 1 or FIG. 2 and the technical solutions correspondingly executed by the first device in the embodiment shown in FIG. 3 or FIG. 4. An implementation principle and a technical effect of the apparatus are similar to those of the method, which are not described again herein.

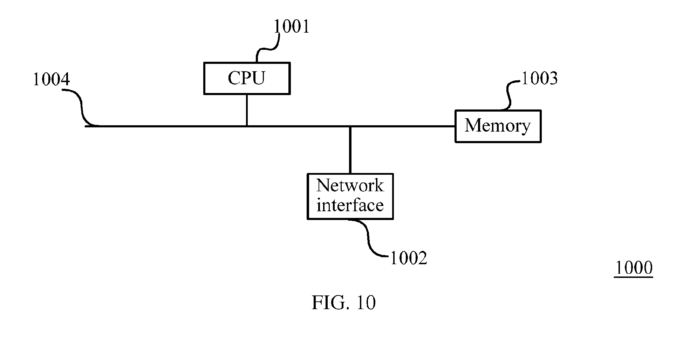

FIG. 10 is a schematic structural diagram of Embodiment 2 of a second device discovery apparatus according to the present invention. As shown in FIG. 10, the second device discovery apparatus 1000 of this embodiment includes: at least one CPU 1001, at least one network interface 1002, a memory 1003, and at least one communications bus 1004. The communications bus 1004 is configured to implement connection and communication between components. The memory 1003 may include a high speed RAM memory, or may include a non-volatile memory (non-volatile memory, NVM for short), for example, at least one magnetic disk memory. The memory 1003 may optionally include at least one storage apparatus to store various types of code, and is configured to implement various basic services and process a task based on hardware.

The CUP 1001 executes the following actions according to an indication of the code stored by the memory 1003: receiving a detection request message transmitted by another device, where the detection request message carries interception rule information, and the interception rule information includes interception time information and/or interception channel information; and transmitting a detection response message in the interception time and/or on an interception channel according to the interception rule information carried in the detection request message.

The apparatus of this embodiment can be configured to execute the technical solution of the method embodiment shown in FIG. 3 and the technical solutions correspondingly executed by the second device in the embodiment shown in FIG. 3 or FIG. 4. An implementation principle and a technical effect of the apparatus are similar to those of the method, which are not described again herein.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, as long as such modifications or replacements do not cause the essence of corresponding technical solutions to depart from the scope of the technical solutions of the embodiments of the present invention.

## Claims

1. A device discovery method, comprising:
transmitting a detection request message on a set transmit channel, wherein the detection request message carries interception rule information of a local device, and the interception rule information comprises at least interception time information and/or interception channel information; and
intercepting, according to the interception rule information, a message transmitted by another device.

2. The device discovery method according to claim 1, wherein the transmitting a detection request message on a set transmit channel comprises:
transmitting the detection request message on one set channel, or transmitting the detection request message on at least two set channels sequentially.

3. The device discovery method according to claim 2, wherein the intercepting, according to the interception rule information, a message transmitted by another device comprises:
according to the interception rule information, intercepting, on the one channel, a message transmitted by another device, or intercepting, sequentially on the at least two set channels, a message transmitted by another device.

4. The device discovery method according to any one of claims 1 to 3, wherein the interception time information in the interception rule information comprises:
an interval from a current moment to a start moment of next interception, interception duration, and/or a time interval between two adjacent interceptions.

5. The device discovery method according to any one of claims 1 to 4, wherein the intercepting, according to the interception rule information, a message transmitted by another device comprises:
intercepting, according to the interception rule information, a detection response message and/or a detection request message transmitted by another device.

6. The device discovery method according to claim 4, wherein an interval between two adjacent transmissions of the detection request message is first duration, the interception duration in the interception rule information is second duration, and the first duration is less than the second duration.

7. The device discovery method according to any one of claims 1 to 6, further comprising:
entering a sleep time according to the interception rule information.

8. The device discovery method according to claim 7, further comprising:
according to the interception rule information, in the sleep time, waking up the local device in at least one set interception window time, and intercepting the message transmitted by another device.

9. A device discovery method, comprising:
receiving a detection request message transmitted by another device, wherein the detection request message carries interception rule information, and the interception rule information comprises interception time information and/or interception channel information; and
transmitting a detection response message in the interception time and/or on an interception channel according to the interception rule information carried in the detection request message.

10. A first device discovery apparatus, comprising:
a detecting module, configured to transmit a detection request message on a set transmit channel, wherein the detection request message carries interception rule information of a local device, and the interception rule information comprises at least interception time information and/or interception channel information; and
an interception module, configured to intercept, according to the interception rule information, a message transmitted by another device.

11. The apparatus according to claim 10, wherein the detecting module is specifically configured to:
transmit the detection request message on one set channel, or transmit the detection request message on at least two set channels sequentially.

12. The apparatus according to claim 11, wherein the interception module is specifically configured to:
according to the interception rule information, intercept, on the one channel, a message transmitted by another device, or intercept, sequentially on the at least two set channels, a message transmitted by another device.

13. The apparatus according to any one of claims 10 to 12, wherein the interception time information in the interception rule information comprises:
an interval from a current moment to a start moment of next interception, interception duration, and/or a time interval between two adjacent interceptions.

14. The apparatus according to any one of claims 10 to 13, wherein the interception module is specifically configured to:
intercept, according to the interception rule information, a detection response message and/or a detection request message transmitted by another device.

15. The apparatus according to claim 13, wherein an interval between two adjacent transmissions of the detection request message is first duration, the interception duration in the interception rule information is second duration, and the first duration is less than the second duration.

16. The apparatus according to any one of claims 10 to 15, further comprising:
a sleep module, configured to enter a sleep time according to the interception rule information.

17. The apparatus according to claim 16, further comprising:
an interception window module, configured to: according to the interception rule information, in the sleep time, wake up the local device in at least one set interception window time, and intercept the message transmitted by another device.

18. A second device discovery apparatus, comprising:
a receiving module, configured to receive a detection request message transmitted by another device, wherein the detection request message carries interception rule information, and the interception rule information comprises interception time information and/or interception channel information; and
a response module, configured to transmit a detection response message in the interception time and/or on an interception channel according to the interception rule information carried in the detection request message.

19. A device discovery system, comprising:
at least one first device discovery apparatus according to any one of claims 10 to 17 and at least one second device discovery apparatus according to claim 18.
